# EUROPÄISCHE PATENTSCHRIFT

(11) **EP 4 305 946 B1**
(45) Veröffentlichungstag und Bekanntmachung des Hinweises auf die Patenterteilung: **10.06.2026**
(21) Anmeldenummer: 23170550.0
(22) Anmeldetag: 28.04.2023
(51) Int. Cl.: A01D 41/12

(54) **WURFGEBLÄSE FÜR EINEN MÄHDRESCHER**
THROWING FAN FOR A COMBINE HARVESTER
VENTILATEUR DE LANCEMENT POUR MOISSONNEUSE-BATTEUSE

(30) Priorität: 13.07.2022 DE 102022117548
(43) Veröffentlichungstag der Anmeldung: 17.01.2024
(73) Patentinhaber: CLAAS Selbstfahrende Erntemaschinen GmbH, 33428 Harsewinkel (DE)
(72) Erfinder: Heinze, Matthias, 33609 Bielefeld (DE); Vieregge, Christopher, 32694 Dörentrup (DE)
(74) Vertreter: CLAAS Gruppe

(56) Entgegenhaltungen:
- EP-A1- 3 000 302
- EP-B1- 1 277 387
- EP-B1- 3 000 301

## Beschreibung

Die vorliegende Erfindung betrifft ein Wurfgebläse für einen Mähdrescher sowie den mit einem solchen Wurfgebläse ausgestatteten Mähdrescher.

Ein Wurfgebläse sowie ein Mähdrescher, bei dem ein solches Wurfgebläse im Anschluss an ein Häckselwerk genutzt wird, um gehäckseltes Stroh und Spreu auf eine soeben abgeerntete Feldfläche auszustreuen, sind aus EP 1 277 387 B1 oder EP3000301A1 bekannt.

Damit das Häckselgut auf dem Feld homogen verteilt werden kann, sollte die Breite eines Feldstreifens, auf der das Wurfgebläse das Häckselgut verteilt, der Arbeitsbreite eines Emtevorsatzes des Mähdreschers entsprechen. Der Rationalisierungsdruck, dem die Landwirtschaft ausgesetzt ist, zwingt dazu, immer breitere Erntevorsätze zu entwickeln, um große Flächen in kurzer Zeit abernten zu können. Je breiter jedoch der Erntevorsatz ist, umso schwieriger wird es, das Häckselgut über dessen gesamte Breite hinweg gleichmäßig auszustreuen, denn die Anfangsgeschwindigkeit, die das Häckselgut beim Verlassen des Wurfgebläses braucht, um eine gegebene Wurfweite zu erreichen, wächst mehr als linear mit der Wurfweite an.

Das Wurfgebläse aus EP 1 277 387 B1 umfasst einen Rotor mit mehreren sich von einer Rotorachse radial erstreckenden Schaufeln und einem mit den Schaufeln rotierenden Teller, die aufgegebenes Häckselgut durch Fliehkraftwirkung breitwürfig verteilen, sowie zwei Streubleche, die um die Rotorachse zwischen einer Überlappstellung, in der die Streubleche mit einer ortsfesten Teilummantelung überlappen und die Richtungen, in denen das Häckselgut vom Rotor fortgeschleudert wird, nur minimal einschränken, und einer Fächerstellung schwenkbar sind, in der sie einen Großteil des Häckselguts quer zur Fahrtrichtung des Mähdreschers ablenken.

Das Streublech mit der größeren Schwenkamplitude wird über einen Exzentermechanismus angetrieben. Dieser umfasst eine Exzenterscheibe, deren Drehung eine Oszillation quer zur Fahrtrichtung einer Koppelstange antreibt, die mit wiederum mit dem Streublech durch den Eingriff eines Stifts in ein Langloch gekoppelt ist. Der Winkelhub des in dieser Weise angetriebenen Streublechs ist begrenzt, denn je kleiner der Winkel zwischen der Längsrichtung des Langlochs und der Bewegungsrichtung des darin eingreifenden Stifts wird, umso kleiner wird das übertragbare Antriebsmoment, und umso größer werden Reibungsverluste und Verschleiß, bis hin zu einer möglichen Selbsthemmung.

Aufgabe der Erfindung ist, ein Wurfgebläse zu schaffen, mit dem bei geringem Verschleiß eine große Streubreite erreichbar ist.

Die Aufgabe wird erfindungsgemäß gelöst, indem bei einem Wurfgebläse für einen Mähdrescher, mit einem um eine Rotorachse drehbaren Rotor, einer sich um einen Teil des Umfangs des Rotors erstreckenden ortsfesten Teilummantelung, wenigstens einem ersten und einem zweiten Streublech, die um eine Schwenkachse zwischen einer Überlappstellung, in der die Streubleche mit einer ortsfesten Teilummantelung überlappen, und einer Fächerstellung schwenkbar sind, in der das zweite Streublech nicht mit der Teilummantelung überlappt und das erste Streublech in Umfangsrichtung des Rotors zwischen der Teilummantelung und dem zweiten Streublech angeordnet ist, und einem Aktor zum Antreiben einer Schwenkbewegung der Streubleche zwischen der Überlappstellung und der Fächerstellung, der Aktor zum Antreiben der Schwenkbewegung trieblich dem ersten Streublech zugeordnet ist. Da dessen Winkelhub allenfalls halb so groß ist wie der des zweiten Streublechs, kann bereits durch diese Maßnahme der Verschleiß deutlich reduziert werden, bzw. der Winkelhub des zweiten Streublechs kann auf Werte nahe 90° vergrößert werden, die bei der oben beschriebenen herkömmlichen Kopplung zur Selbsthemmung führen würden.

Um Reibungsverluste weiter zu reduzieren, kann die triebliche Zuordnung darin bestehen, dass der Aktor an einem Anlenkpunkt punktuell schwenkbar mit dem ersten Streublech verbunden ist.

Wenn das erste Streublech einen sich in Umfangsrichtung des Rotors erstreckenden Wandabschnitt und einen den Wandabschnitt mit der Rotorachse verbindenden Trägerarm aufweist, ist der Anlenkpunkt vorzugsweise an dem Trägerarm vorgesehen. So genügt ein kurzer Weg des Aktors, um einen den Wandabschnitt entlang eines längeren Weges zu verschieben.

Der Aktor kann insbesondere ein Stellzylinder sein, der entlang einer quer zur Rotorachse orientierten Längsachse ausfahrbar und zusammenziehbar ist.

Damit der Aktor ein hohes Drehmoment auf das Streublech ausüben kann, sollte er so angeordnet sein, dass er zwischen einer maximal ausgefahrenen Stellung und einer maximal zusammengezogenen Stellung eine Stellung durchläuft, in der ein Radius, der den Anlenkpunkt mit der Schwenkachse verbindet, orthogonal zur Längsachse des Aktors ist.

Zur Kopplung zwischen dem ersten und dem zweiten Streublech kann ein Viergelenk vorgesehen sein, das einen um eine gegen die Rotorachse versetzte Hebelachse schwenkbaren zweiarmigen Hebel, einen an einen ersten Arm des Hebels und das erste Streublech angelenkten ersten Lenker und einen an einen zweiten Arm des Hebels und das zweite Streublech angelenkten zweiten Lenker umfasst.

Der zweite Lenker kann platzsparend zwischen einer die Rotorachse und die Hebelachse enthaltenden Ebene und dem Aktor angeordnet sein.

Der erste Lenker kann auf einer dem zweiten Lenker gegenüberliegenden Seite der Ebene angeordnet sein.

Für einen kompakten Aufbau ist es ferner hilfreich, wenn die die Hebelachse weiter von einer Längsachse des Aktors beabstandet ist als die Rotorachse; so können die beiden Lenker unabhängig von der Stellung, in der sich die Streubleche befinden im Wesentlichen parallel zueinander und zu der Längsachse ausgerichtet sein.

Wenn der Rotor in an sich bekannter Weise einen Rotorteller und eine Mehrzahl von sich von der Rotorachse aus radial erstreckenden Wurfschaufeln aufweist, können Außenkanten der Wurfschaufeln über den Umfang des Rotortellers überstehen. Indem somit die Wurfschaufeln nah an die Wandabschnitte der Streubleche heranreichen können, können sie das auf den Rotor aufgegebene Häckselgut effizient beschleunigen; gleichzeitig verhindert der im Vergleich größere Abstand des Randes des Rotortellers von den Wandabschnitten, dass Häckselgutpartikel zwischen den Wandabschnitten und dem Rand des Rotortellers eingeklemmt wird und die Drehung des Rotortellers behindert.

Gegenstand der Erfindung ist auch ein Mähdrescher mit einem Wurfgebläse wie oben beschrieben. Der oben erläuterte Aufbau des Wurfgebläses erlaubt es, das zweite Streublech so weit zu schwenken, dass zumindest in der aufgefächerten Stellung ein maximaler Winkel zwischen einer Längsrichtung des Mähdreschers und einer Tangente an einen Wandabschnitt des zweiten Streublechs über 80°, insbesondere über 84° beträgt. Die Flugrichtung von an diesem Streublech abgelenkten Streugutpartikels ist dadurch nahezu exakt in Querrichtung des Mähdreschers, und die Entfernung von einer Mittelebene des Mähdreschers, in der das Häckselgut auf dem Feld niedergeht, ist maximal.

Die Schwenkachse der Streubleche des Wurfgebläses ist typischerweise parallel zur Rotorachse seines Rotors, beide können identisch sein. Vorzugsweise ist die Schwenkachse gegen die Rotorachse geringfügig nach vorn oder zur Mitte des Mähdreschers hin versetzt. In der Überlappstellung muss der Abstand zwischen den Wandabschnitten der Streubleche und der ortsfesten Teilummantelung groß genug sein, damit die Wandabschnitte von der Rotorachse aus gesehen hinter die ortsfeste Teilummantelung eingreifen können. In der Fächerstellung verhindert jedoch ein großer Abstand zwischen den Wandabschnitten und den Wurfschaufeln ein effizientes Beschleunigen des Häckselguts. Der Versatz zwischen den beiden Achsen bewirkt, dass die Wandabschnitte der Streubleche dem Rotor immer näher kommen, je weiter sie sich aus der Überlappstellung entfernen, und somit die Beschleunigung des Häckselguts mit zunehmender Auslenkung der Streubleche effizienter wird.

Wenn der Mähdrescher zwei zueinander spiegelbildliche Wurfgebläse aufweist, können die ortsfesten Teilummantelungen der Wurfgebläse einander hinter den Wurfgebläsen kreuzende Tangenten aufweisen. Dies ermöglicht es beiden Wurfgebläsen, in die Mitte des zu bestreuenden Feldstreifens zu streuen und so gleichmäßige Verteilung des Häckselguts zu erreichen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines erfindungsgemäßen Mähdreschers mit Wurfgebläse;
- Fig. 2: eine Ansicht von zwei Wurfgebläsen aus axialer Richtung.

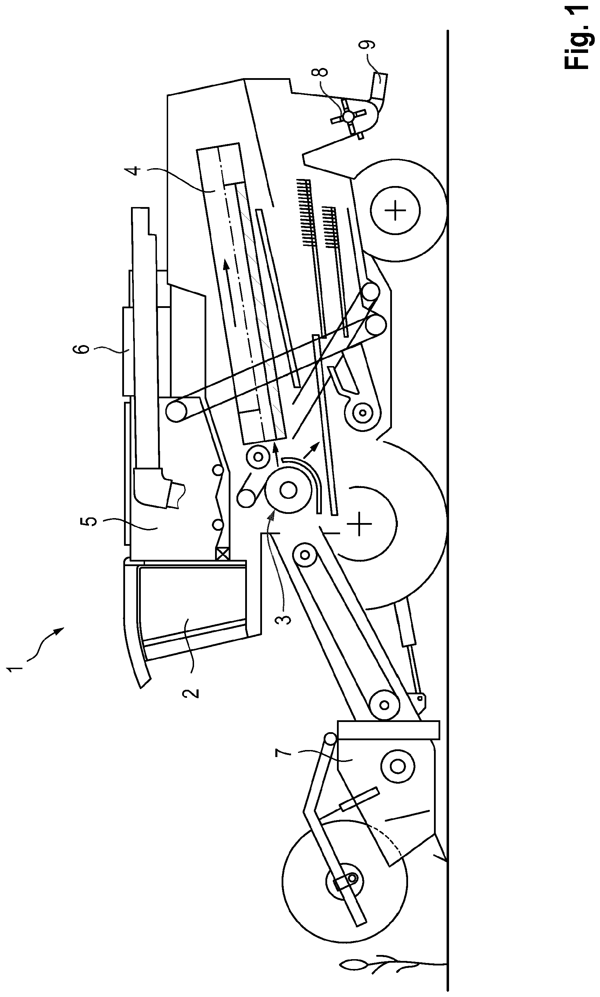

Fig. 1 zeigt schematisch den Aufbau eines erfindungsgemäßen Mähdreschers 1. In einer Karosserie 1 des Mähdreschers sind, hinter einer Fahrerkanzel oder -kabine 2, ein Dreschwerk 3, Hordenschüttler 4 sowie an sich bekannte und hier nicht beschriebene Vorrichtungen zum Reinigen von in Dreschwerk 3 und Hordenschüttler 4 abgeschiedenem Korn, ein Korntank 5 und ein Motor 6 untergebracht. Vorn an der Karosserie 1 ist ein Erntewerkzeug 7 austauschbar und höhenverstellbar montiert, dessen Arbeitsbreite weit über 10 m betragen kann. Spreu und ausgedroschenes Stroh, die in Dreschwerk 3 und Hordenschüttler 4 abgeschieden werden, erreichen über ein Häckselwerk 8 eine Verteilereinrichtung 9.

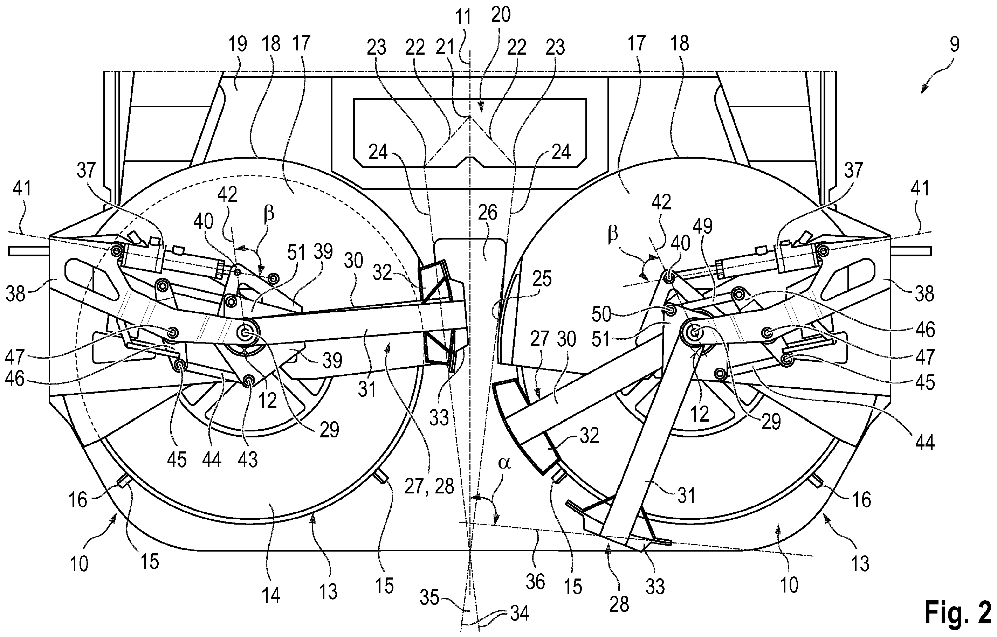

Die Verteilereinrichtung 9 umfasst zwei Wurfgebläse 10, die jeweils spiegelbildlich zueinander aufgebaut und beiderseits einer Längsmittelebene 11 des Mähdreschers angebracht sind. Fig. 2 zeigt die Wurfgebläse gesehen von unten aus einer zu Rotorachsen 12 ihrer Rotoren 13 parallelen Richtung. Die Rotoren 13 umfassen jeweils einen kreisscheiben- oder, wie in Fig. 2, ringförmigen Rotorteller 14 und sich radial von den Rotorachsen 12 fort erstreckende Wurfschaufeln 15, deren äußere Kanten 16 geringfügig über den Rand des Rotortellers 14 vorspringen.

Die Rotoren 13 sind jeweils aufgenommen in einem zylindersegmentförmigen Gehäuse mit einer Bodenplatte 17 und einer sich entlang einer sich entlang eines kreisbogenförmigen Randes der Bodenplatte erstreckenden Umfangswand 18. Die Höhe der Umfangswand 18 ist kleiner als die Höhe des Rotors 13, so dass entlang einer Oberkante der Umfangswand 18 Häckselgut von einer an diese Oberkante anschließenden Rampe 19 auf den Rotor 13 nachrücken kann. Die Umfangswand 18 bewirkt, dass das Häckselgut vom Rotor 13 nicht sofort wieder auf die Rampe 19 zurückgeschoben, sondern entlang der Umfangswand 18, im Uhrzeigersinn beim in linken Rotor 13 der Fig. 2, im Gegenuhrzeigersinn beim rechten Rotor 13, abtransportiert und beschleunigt wird.

An einer in Fig. 2 an sich nicht sichtbaren Oberseite der Rampe 18 ist ein Gutstromteiler 20 montiert, dessen Umriss in Fig. 2 als gestrichelte Linie eingezeichnet ist. Von einer dem Häckselwerk 8 zugewandten Spitze 21 des Gutstromteilers 20 erstrecken sich zunächst zwei nach hinten divergierende Flanken 22 bis zu einem Wendepunkt 23. An den Wendepunkt 23 schließen sich nach hinten konvergierende Flanken 24 an.

Die Flanken 24 des Gutstromteilers 20 bilden zumindest in ihrem hinteren Bereich eine ortsfeste Teilummantelung 25 für jeweils einen der Rotoren 13, die sich eng benachbart zum Umlaufkreis der Außenkanten 16 seiner Wurfschaufeln erstreckt. Zwischen den Teilummantelungen 25 ist die Rampe 19 ausgeschnitten, so dass hier ein nach hinten offener Zwischenraum 26 gebildet ist.

Jedes der in Fig. 2 gezeigten Wurfgebläse 10 hat zwei Streubleche 27, 28, das im Folgenden beschriebene Konstruktionsprinzip ist aber auch auf eine größere Zahl von Streublechen übertragbar. Jedes Streublech 27, 28 hat eine Schwenkachse 29, um die es schwenkbar ist, und die parallel zur Rotorachse 12, aber relativ zu dieser geringfügig in Richtung der Längsmittelebene 11 und/oder nach vorn versetzt ist. Vorzugsweise haben beide Streubleche 27, 28 dieselbe Schwenkachse 29, dies ist aber nicht zwingend.

Die Streubleche 27, 28 umfassen jeweils einen sich von der Schwenkachse 29 aus zum Rand des Rotors 13 erstreckenden Trägerarm 30, 31 und einen sich in Richtung der Schwenkachse 29 sowie in deren Umfangsrichtung erstreckenden Wandabschnitt 32, 33. Die Streubleche 27, 28 befinden sich beim linken Wurfgebläse 10 der Fig. 2 in einer Überlappstellung im Zwischenraum 26; beim rechten Wurfgebläse 10 sind sie aus dem Zwischenraum 26 nach hinten in eine Fächerstellung ausgefahren.

In der Überlappstellung überlappen die Teilummantelung 25 und die Wandabschnitte 32, 33 bezogen auf die Umfangsrichtung des Rotors 13, wie in der linken Hälfte von Fig. 2 zu sehen. Der Trägerarm 30 des Streublechs 27 ist hinter dem Trägerarm 31 des Streublechs 28 verborgen, und von seinem Wandabschnitt 32 sind nur beiderseits des Trägerarms 31 überstehende Teile zwischen dem Wandabschnitt 33 und der ortsfesten Teilummantelung 25 zu sehen. In der Überlappstellung beeinflussen die Streubleche 27, 28 den Weg des Häckselguts nicht; dieses verlässt das linke Wurfgebläse 10 daher größtenteils entlang eines an die ortsfeste Teilummantelung 25 angrenzenden Randbereichs des Rotors 13, aufgefächert über einen Winkelbereich, der zum gegenüberliegenden Wurfgebläse hin durch eine Tangente 34 der Teilummantelung 25 begrenzt ist. Da die Tangenten 34 von beiden Wurfgebläsen 10 nach hinten aufeinander zulaufen und sich kreuzen, gibt es hinter dem Mähdrescher benachbart zur Längsmittelebene 11 einen Bereich 35 der Feldoberfläche, der Häckselgut vom linken als auch vom rechten Wurfgebläse 10 empfangen kann, wenn sich bei letzterem die Streubleche in der Überlappstellung befinden.

Typischerweise werden die Streubleche beider Wurfgebläse 10 mit einem Phasenversatz von einer halben Periode zueinander bewegt, so dass sich, wenn das linke Wurfgebläse 10 in der Überlappstellung befindet, das rechte wie in Fig. 2 gezeigt eine Fächerstellung einnimmt, in der seine Streubleche 27, 28 maximal gegen aus der Überlappstellung ausgelenkt sind. Der Winkelhub der Streubleche 27, 28 in der Fächerstellung ist so bemessen, dass eine Tangente 36 an einen hinteren Rand des Wandabschnitts 33 die Längsmittelebene 11 unter einem Winkel α von über 80° oder mehr kreuzt. Da nicht alle Partikel des Häckselguts den Rotor entlang der Tangente 36 verlassen, sondern einige etwas weiter mitgenommen werden, muss der Winkel α etwas kleiner als 90° sein, damit die Partikel im Mittel im rechten Winkel zur Längsmittelebene 11 ausgestoßen werden; bevorzugt ist ein Winkel α von 83-86°, insbesondere 84-85°.

Um die Schwenkbewegung der Streubleche 27, 28 anzutreiben, ist an jedem Wurfgebläse ein hydraulisches Stellglied 37 vorgesehen. Ein Zylinder des Stellglieds 37 ist jeweils schwenkbar an ein langgestrecktes Rahmenelement 38 angelenkt, das sich von einer Außenseite der Karosserie 1 her unter der Bodenplatte 17 des Wurfgebläses 10 bis zur Schwenkachse 29 erstreckt und die Streubleche 27, 28 lagert. Eine hier rautenförmige Platte 39 ist am achsnahen Ende des (beim linken Wurfgebläse fast vollständig hinter dem Trägerarm 31 verborgenen) Trägerarms 30 befestigt, so dass an beiden Seiten des Trägerarms 30 jeweils ein dreieckiger Teil der Platte 39 vorsteht. An der Spitze eines dieser dreieckigen Teile ist ein Kolben des Stellglieds 37 angelenkt. Eine Längsachse 41 des Stellglieds und ein von der Schwenkachse 29 ausgehender Radius 42 kreuzen sich am Anlenkpunkt 40 unter einem Winkel β, der im Laufe der Ein- und Ausfahrbewegung des Stellglieds 37 um 90° schwankt.

An der Spitze des zweiten dreieckigen Teils der Platte 39 befindet sich ein weiterer Anlenkpunkt 43. Ein starrer Lenker 44 verbindet diesen Anlenkpunkt 43 mit einem weiteren Anlenkpunkt 45 an einem Ende eines zweiarmigen Hebels 46, der seinerseits um eine an dem Rahmelement 38 gelagerte Achse 47 schwenkbar ist. Der Hebelarm des Anlenkpunkts 45 relativ zur Achse 47 ist kürzer als der des Anlenkpunkts 42 relativ zur Achse 29, so dass der Schwenkwinkel des Hebels 46 immer größer ist als der des Trägerarms 30.

Ein zweiter, längerer Arm des Hebels 46 erstreckt sich in Richtung des Stellgliedes und trägt über einen Anlenkpunkt 48 ein Ende eines zweiten Lenkers 49, dessen zweites Ende wiederum an einem Anlenkpunkt 50 mit einer vom Trägerarm 31 abstehende Platte 51 verbunden ist.

Auch die Anlenkpunkte 43, 45, 48, 50 sind so platziert, dass ein zwischen den Längsachsen der angreifenden Lenker 44, 49 und einem vom zugehörigen Drehmittelpunkt 29 oder 47 ausgehender Radius im Laufe der Ein- und Ausfahrbewegung des Stellglieds 37 mal größer, mal kleiner als 90° ist. So besteht zwischen den beiden Streublechen 27, 28 ein einen im Laufe der Bewegung im wesentlichen konstantes Übersetzungsverhältnis. Der Wert dieses Übersetzungsverhältnisses ist durch die Hebelarmlängen der Anlenkpunkte 40, 43, 45, 48, 50 festgelegt und beträgt etwa 1:2, d.h. der Winkelhub des Streublechs 28 ist etwa doppelt so groß wie der des Streublechs 27.

Infolge des Versatzes zwischen der Rotorachse 12 und der Schwenkachse 29 nähern sich die Wandabschnitte 32, 33 im Laufe einer Bewegung in Richtung der Fächerstellung dem Umfang des Rotors 13. Dadurch kann, obwohl in der Überlappstellung die Teilummantelung 25 zwischen dem Rotor 13 und den Wandabschnitten 27, 28 Platz findet, der Abstand zwischen dem Rotor 13 und dem Wandabschnitt 32 in der Fächerstellung genauso klein gehalten werden wir zwischen dem Rotor 13 und der Teilummantelung 25, oder kann sogar kleiner als dieser gemacht werden. So ist sichergestellt, dass Häckselgutteilchen, die auf dem Weg durch das Wurfgebläse an den Wandabschnitten 32, 33 entlangschleifen, nicht nennenswert verlangsamt werden, sondern, indem sie von den Wurfschaufeln 15 unmittelbar angeschoben werden, das Wurfgebläse mit einer Geschwindigkeit verlassen, die der Bahngeschwindigkeit der äußeren Kanten 16 entspricht, und somit eine hohe Wurfweite erreichen können.

### Bezugszeichen

- 1: Karosserie
- 2: Fahrerkanzel
- 3: Dreschwerk
- 4: Hordenschüttler
- 5: Korntank
- 6: Motor
- 7: Erntewerkzeug
- 8: Häckselwerk
- 9: Verteilereinrichtung
- 10: Wurfgebläse
- 11: Längsmittelebene
- 12: Rotorachse
- 13: Rotor
- 14: Rotorteller
- 15: Wurfschaufel
- 16: äußere Kante
- 17: Bodenplatte
- 18: Umfangswand
- 19: Rampe
- 20: Gutstromteiler
- 21: Spitze
- 22: divergierende Flanken
- 23: Wendepunkt
- 24: konvergierende Flanken
- 25: ortsfeste Teilummantelung
- 26: Zwischenraum
- 27: Streublech
- 28: Streublech
- 29: Schwenkachse
- 30: Trägerarm
- 31: Trägerarm
- 32: Wandabschnitt
- 33: Wandabschnitt
- 34: Tangente
- 35: Bereich
- 36: Tangente
- 37: Stellglied
- 38: Rahmenelement
- 39: Platte
- 40: Anlenkpunkt
- 41: Längsachse
- 42: Radius
- 43: Anlenkpunkt
- 44: Lenker
- 45: Anlenkpunkt
- 46: Hebel
- 47: Achse
- 48: Anlenkpunkt
- 49: Lenker
- 50: Anlenkpunkt
- 51: Platte

## Patentansprüche

1. Wurfgebläse (10) für einen Mähdrescher, mit einem um eine Rotorachse (12) drehbaren Rotor (13), einer sich um einen Teil des Umfangs des Rotors (13) erstreckenden ortsfesten Teilummantelung (25), wenigstens einem ersten und einem zweiten Streublech (27, 28), die um eine Schwenkachse (29) zwischen einer Überlappstellung, in der die Streubleche (27, 28) mit der ortsfesten Teilummantelung (25) überlappen, und einer Fächerstellung schwenkbar sind, in der mindestens das zweite Streublech (28) nicht mit der Teilummantelung (25) überlappt und das erste Streublech (27) in Umfangsrichtung des Rotors (13) zwischen der Teilummantelung (25) und dem zweiten Streublech (28) angeordnet ist, und einem Aktor (37) zum Antreiben einer Schwenkbewegung der Streubleche (27, 28) zwischen der Überlappstellung und der Fächerstellung,
**dadurch gekennzeichnet, dass** der Aktor (37) zum Antreiben der Schwenkbewegung trieblich dem ersten Streublech (27) zugeordnet ist.

2. Wurfgebläse nach Anspruch 1, **dadurch gekennzeichnet, dass** die triebliche Zuordnung darin besteht, dass der Aktor (37) an einem Anlenkpunkt (40) punktuell schwenkbar mit dem ersten Streublech (27) verbunden ist.

3. Wurfgebläse nach Anspruch 2, **dadurch gekennzeichnet, dass** das erste Streublech (27) einen sich in Umfangsrichtung des Rotors (13) erstreckenden Wandabschnitt (32) und einen den Wandabschnitt (32) mit der Schwenkachse (29) verbindenden Trägerarm (30) aufweist und dass der Anlenkpunkt (40) an dem Trägerarm (30) vorgesehen ist.

4. Wurfgebläse nach Anspruch 1, 2 oder 3, **dadurch gekennzeichnet, dass** der Aktor (37) ein Stellzylinder ist, der entlang einer quer zur Rotorachse (12) orientierten Längsachse (41) ausfahrbar und zusammenziehbar ist.

5. Wurfgebläse nach Anspruch 4, **dadurch gekennzeichnet, dass** der Aktor (37) zwischen einer maximal ausgefahrenen Stellung und einer maximal zusammengezogenen Stellung eine Stellung durchläuft, in der ein Radius (42), der den Anlenkpunkt (40) mit der Schwenkachse (29) verbindet, orthogonal zur Längsachse (41) ist.

6. Wurfgebläse nach einem der vorhergehenden Ansprüche,
**dadurch gekennzeichnet, dass** ein Trägerarm (31) des zweiten Streublechs (28) mit dem ersten Streublech (27) über ein Viergelenk gekoppelt ist, wobei das Viergelenk einen um eine gegen die Schwenkachse (29) versetzte Hebelachse (47) schwenkbaren zweiarmigen Hebel (46), einen an einen ersten Arm des Hebels (46) und das erste Streublech (27) angelenkten ersten Lenker (44) und einen an einen zweiten Arm des Hebels (46) und das zweite Streublech (28) angelenkten zweiten Lenker (49) umfasst.

7. Wurfgebläse nach Anspruch 6, **dadurch gekennzeichnet, dass** der zweite Lenker (49) zwischen einer die Schwenkachse (29) und die Hebelachse (47) enthaltenden Ebene und dem Aktor (13) angeordnet ist.

8. Wurfgebläse nach Anspruch 7, **dadurch gekennzeichnet, dass** der erste Lenker (44) und der zweite Lenker (49) auf gegenüberliegenden Seiten der die Schwenkachse (29) und die Hebelachse (47) enthaltenden Ebene angeordnet sind.

9. Wurfgebläse nach einem der Ansprüche 6 bis 8, **dadurch gekennzeichnet, dass** die Hebelachse (46) weiter von einer Längsachse (41) des Aktors (37) beabstandet ist als die Schwenkachse (29).

10. Wurfgebläse nach einem der Ansprüche 6 bis 9, **dadurch gekennzeichnet, dass** der zweite Arm des Hebels (46) kürzer ist als der erste Arm.

11. Wurfgebläse nach einem der vorhergehenden Ansprüche,
**dadurch gekennzeichnet, dass** der Rotor (13) einen Rotorteller (14) und eine Mehrzahl von sich in bezüglich der Rotorachse (12) radialer Richtung bis zu einer Außenkante (16) erstreckenden Wurfschaufeln (15) aufweist und dass die Außenkanten (16) der Wurfschaufeln (15) über den Umfang des Rotortellers (14) überstehen.

12. Mähdrescher mit einem Wurfgebläse nach einem der vorhergehenden Ansprüche, wobei optional ein maximaler Winkel (α) zwischen einer Längsmittelebene (11) des Mähdreschers und einer Tangente (36) an einen Wandabschnitt (33) des zweiten Streublechs (28) über 80°, insbesondere über 84° und optional unter 90° beträgt.

13. Mähdrescher nach Anspruch 12, bei dem die Schwenkachse (29) des wenigstens einen Wurfgebläses (10) relativ zur Rotorachse (12) nach vorn oder zu einer Längsmittelebene (11) des Mähdreschers versetzt ist.

14. Mähdrescher nach Anspruch 13, bei dem das eine Wurfgebläse (10) und ein zweites Wurfgebläse (10) spiegelbildlich angeordnet sind und eine Tangente (34) der ortsfesten Teilummantelung (25) des ersten Wurfgebläses (10) und eine Tangente (34) der ortsfesten Teilummantelung (25) des zweiten Wurfgebläses (10) einander hinter den Wurfgebläsen (10) kreuzen.

## Claims

1. Ejector blower (10) for a combine harvester, having a rotor (13) which is rotatable about a rotor axis (12), having a positionally fixed partial casing (25) which extends around a part of the circumference of the rotor (13), having at least a first and a second spreader plate (27, 28) which are pivotable about a pivot axis (29) between an overlap position, in which the spreader plates (27, 28) overlap the positionally fixed partial casing (25), and a fan position, in which at least the second spreader plate (28) does not overlap the partial casing (25) and the first spreader plate (27) is arranged between the partial casing (25) and the second spreader plate (28) in a circumferential direction of the rotor (13), and having an actuator (37) for driving a pivoting movement of the spreader plates (27, 28) between the overlap position and the fan position,
**characterized in that**, for driving the pivoting movement, the actuator (37) is assigned to the first spreader plate (27) in terms of drive.

2. Ejector blower according to Claim 1, **characterized in that** the assignment in terms of drive consists **in that** the actuator (37) is connected in a pivotable manner to the first spreader plate (27) at an articulation point (40).

3. Ejector blower according to Claim 2, **characterized in that** the first spreader plate (27) has a wall portion (32) extending in the circumferential direction of the rotor (13), and has a carrier arm (30) extending between the wall portion (32) and the pivot axis (29), and **in that** the articulation point (40) is provided on the carrier arm (30).

4. Ejector blower according to Claim 1, 2 or 3, **characterized in that** the actuator (37) is an adjustment cylinder which is extendable and retractable along a longitudinal axis (41) which is oriented transversely to the rotor axis (12).

5. Ejector blower according to Claim 4, **characterized in that** the actuator (37), between a position of maximum extension and a position of maximum retraction, passes through a position at which a radius (42) that extends between the articulation point (40) and the pivot axis (29) is orthogonal to the longitudinal axis (41).

6. Ejector blower according to one of the preceding claims, **characterized in that** a carrier arm (31) of the second spreader plate (28) is coupled to the first spreader plate (27) via a four-bar linkage, wherein the four-bar linkage comprises a two-arm lever (46), which is pivotable about a lever axis (47) that is offset in relation to the pivot axis (29), a first link (44), which is articulated on a first arm of the lever (46) and the first spreader plate (27), and a second link (49), which is articulated on a second arm of the lever (46) and the second spreader plate (28).

7. Ejector blower according to Claim 6, **characterized in that** the second link (49) is arranged between a plane containing the pivot axis (29) and the lever axis (47) and the actuator (13).

8. Ejector blower according to Claim 7, **characterized in that** the first link (44) and the second link (49) are arranged on opposite sides of the plane containing the pivot axis (29) and the lever axis (47).

9. Ejector blower according to one of Claims 6 to 8, **characterized in that** the lever axis (46) is spaced further apart from a longitudinal axis (41) of the actuator (37) than the pivot axis (29).

10. Ejector blower according to one of Claims 6 to 9, **characterized in that** the second arm of the lever (46) is shorter than the first arm.

11. Ejector blower according to one of the preceding claims, **characterized in that** the rotor (13) has a rotor plate (14) and a plurality of ejector paddles (15) which extend as far as an outer edge (16) in a radial direction in relation to the rotor axis (12), and **in that** the outer edges (16) of the ejector paddles (15) project beyond the circumference of the rotor plate (14).

12. Combine harvester having an ejector blower according to one of the preceding claims, wherein optionally a maximum angle (α) between a longitudinal central plane (11) of the combine harvester and a tangent (36) to a wall portion (33) of the second spreader plate (28) is greater than 80°, in particular greater than 84°, and optionally less than 90°.

13. Combine harvester according to Claim 12, in which the pivot axis (29) of the at least one ejector blower (10) is offset in relation to a longitudinal central plane (11) of the combine harvester or in a forward direction relative to the rotor axis (12).

14. Combine harvester according to Claim 13, in which the one ejector blower (10) and a second ejector blower (10) are arranged in a mirror-inverted manner and a tangent (34) to the positionally fixed partial casing (25) of the first ejector blower (10) and a tangent (34) to the positionally fixed partial casing (25) of the second ejector blower (10) intersect one another behind the ejector blowers (10).

## Revendications

1. Soufflante de dispersion (10) pour une moissonneuse-batteuse, présentant un rotor (13) pouvant tourner autour d'un axe (12) de rotor, une enveloppe partielle (25) fixe s'étendant autour d'une partie de la périphérie du rotor (13), au moins un premier et un deuxième déflecteur (27, 28), qui peuvent pivoter autour d'un axe de pivotement (29) entre une position de chevauchement, dans laquelle les déflecteurs (27, 28) chevauchent l'enveloppe partielle (25) fixe, et une position en éventail, dans laquelle au moins le deuxième déflecteur (28) ne chevauche pas l'enveloppe partielle (25) et le premier déflecteur (27) est agencé, dans la direction périphérique du rotor (13), entre l'enveloppe partielle (25) et le deuxième déflecteur (28), et un actionneur (37) destiné à entraîner un mouvement de pivotement des déflecteurs (27, 28) entre la position de chevauchement et la position en éventail,
**caractérisée en ce que** l'actionneur (37) est affecté cinématiquement au premier déflecteur (27) pour l'entraînement du mouvement de pivotement.

2. Soufflante de dispersion selon la revendication 1, **caractérisée en ce que** l'affectation cinématique réside **en ce que** l'actionneur (37) est relié en un point d'articulation (40) de manière ponctuellement pivotante au premier déflecteur (27).

3. Soufflante de dispersion selon la revendication 2, **caractérisée en ce que** le premier déflecteur (27) présente une section de paroi (32) s'étendant dans la direction périphérique du rotor (13) et un bras support (30) reliant la section de paroi (32) à l'axe de pivotement (29) et **en ce que** le point d'articulation (40) est prévu sur le bras support (30).

4. Soufflante de dispersion selon la revendication 1, 2 ou 3, **caractérisée en ce que** l'actionneur (37) est un vérin de réglage qui est déployable et rétractable le long d'un axe longitudinal (41) orienté transversalement par rapport à l'axe (12) de rotor.

5. Soufflante de dispersion selon la revendication 4, **caractérisée en ce que** l'actionneur (37) passe, entre une position déployée au maximum et une position rétractée au maximum, par une position dans laquelle un rayon (42), qui relie le point d'articulation (40) à l'axe de pivotement (29), est orthogonal à l'axe longitudinal (41).

6. Soufflante de dispersion selon l'une des revendications précédentes, **caractérisée en ce qu'**un bras support (31) du deuxième déflecteur (28) est accouplé par l'intermédiaire d'une articulation à quatre points au premier déflecteur (27), l'articulation à quatre points comprenant un levier (46) à deux bras pouvant pivoter autour d'un axe (47) de levier décalé par rapport à l'axe de pivotement (29), une première biellette (44) articulée sur un premier bras du levier (46) et le premier déflecteur (27) et une deuxième biellette (49) articulée sur un deuxième bras du levier (46) et le deuxième déflecteur (28) .

7. Soufflante de dispersion selon la revendication 6, **caractérisée en ce que** la deuxième biellette (49) est agencée entre un plan, contenant l'axe de pivotement (29) et l'axe (47) de levier, d'une part et l'actionneur (13) d'autre part.

8. Soufflante de dispersion selon la revendication 7, **caractérisée en ce que** la première biellette (44) et la deuxième biellette (49) sont agencées sur des côtés opposés du plan contenant l'axe de pivotement (29) et l'axe (47) de levier.

9. Soufflante de dispersion selon l'une des revendications 6 à 8, **caractérisée en ce que** l'axe (46) de levier est situé plus loin par rapport à un axe longitudinal (41) de l'actionneur (37) que l'axe de pivotement (29).

10. Soufflante de dispersion selon l'une des revendications 6 à 9, **caractérisée en ce que** le deuxième bras du levier (46) est plus court que le premier bras.

11. Soufflante de dispersion selon l'une des revendications précédentes, **caractérisée en ce que** le rotor (13) présente une assiette (14) de rotor et une pluralité de pales de dispersion (15) s'étendant dans la direction radiale par rapport à l'axe (12) de rotor jusqu'à un bord externe (16) et **en ce que** les bords externes (16) des pales de dispersion (15) dépassent de la périphérie de l'assiette (14) de rotor.

12. Moissonneuse-batteuse présentant une soufflante de dispersion selon l'une des revendications précédentes, un angle maximal (α) entre un plan central longitudinal (11) de la moissonneuse-batteuse et une tangente (36) à une section (33) de paroi du deuxième déflecteur (28) représentant éventuellement plus de 80°, en particulier plus de 84° et éventuellement moins de 90°.

13. Moissonneuse-batteuse selon la revendication 12, pour laquelle l'axe de pivotement (29) de ladite au moins une soufflante de dispersion (10) est décalé vers l'avant ou vers un plan central longitudinal (11) de la moissonneuse-batteuse par rapport à l'axe (12) de rotor.

14. Moissonneuse-batteuse selon la revendication 13, pour laquelle ladite une soufflante de dispersion (10) et une deuxième soufflante de dispersion (10) sont agencées de manière spéculaire et une tangente (34) de l'enveloppe partielle (25) fixe de la première soufflante de dispersion (10) et une tangente (34) de l'enveloppe partielle (25) fixe de la deuxième soufflante de dispersion (10) se croisent derrière les soufflantes de dispersion (10).
